# EUROPEAN PATENT APPLICATION

(11) **EP 1 788 653 A1**
(43) Date of publication of application: **23.05.2007**
(21) Application number: 05770558.4
(22) Date of filing: 10.08.2005
(51) Int. Cl.: H01M 8/02, H01M 8/12, C04B 41/89

(54) **FILM-FORMED ARTICLE**

(30) Priority: 10.08.2004 JP 2004233740
(71) Applicant: Central Research Institute of Electric Power Industry, Tokyo 100-8126 (JP)
(72) Inventor: YASUMOTO, Kenji, INST. OF ELECT. POWER INDUSTRY, Yokosuka-shi, Kanagawa 240-0196 (JP); ITOH, Hibiki, INST. OF ELECT. POWER INDUSTRY, Yokosuka-shi, Kanagawa 240-0196 (JP); YAMAMOTO, Tohru, INST. OF ELECT. POWER INDUSTRY, Yokosuka-shi, Kanagawa 240-0196 (JP)
(74) Representative: Khan, Mohammed Saiful Azam
(86) International application number: PCT/JP2005/014696
(87) International publication number: WO 2006/016628

(57) **Abstract**

It is to prevent calcium contained in a material for interconnector from flowing out under a high temperature and humid atmosphere. Onto a fuel electrode 2 which includes zirconia in its composition, an interconnector film 5 made of lanthanum chromite-based perovskite type oxide which includes calcium in its composition is formed, and then onto the interconnector film 5, a protective layer 7 is formed with using La_{0.6}Sr_{0.4}MnO₃.

## Description

### Technical field

This invention relates to a film formed article. More particularly, this invention relates to a film formed article which is suitable for protecting an interconnector on the fuel electrode (anode) of a solid oxide fuel cell from steam.

### Background art

In the flat type solid oxide fuel (SOFC) disclosed in the patent document 1, each single cell is composed of a porous fuel electrode, a electrolyte film formed on the surface or the rear face of the porous fuel cell, an air electrode (cathode) film formed on the electrolyte film, an interconnector film formed on the other face of the porous fuel electrode, and a porous air electrode contacted with the air electrode film. Then, the single cells are stacked up and manifold boards are attached on the respective sides of the obtained stack in order to form a cell stack. As the fuel electrode, a sintered body of a mixture of nickel (nickel oxide in the manufacturing process) and yttria stabilized zirconia (YSZ) is disclosed.

As for the interconnector (it is also called "separator"), it is demanded to be dense so as to separate the supplied fuel gas and air without mixing them, to have a high electrical conductivity in order to connect electrically the adjacent cells mutually, and to have a thermal expansion coefficient which is analogous to those of other components of the cell. Lanthanum chromite-based oxides have been used as the material for the interconnector which can satisfy such demands. Moreover, it has been also done to dope calcium to the lanthanum chromite-based oxide in order to obtain a dense film. As methods for forming the interconnector film, slurry coating method, coating and thermal decomposition method, and sol-gel method are disclosed in the patent document 1.

Patent document 1: PCT/JP99/02897 (International publication No.: WO 00/74159)

### Disclosure of the Invention

### Problems to be solved by the invention

However, the calcium doped lanthanum chromite-based perovskite type oxide which is used as material for the interconnector may cause a chemical reaction of generating Ca₅(CrO₄)₃OH under the condition where the temperature is 1000 °C and excessive steam of the oxidation and reducing atmosphere exists, the condition being the power generation condition of SOFC. Namely, the material of interconnector is corroded by the steam, and the outflow of calcium and chromium are produced by the formation of Ca₅(CrO₄)₃OH, Therefore, there is a problem that the electrical conductivity of the interconnector decreases, and the pores are formed in the interconnector which should be dense. Although it is considerable to take measures for preventing the air to be supplied to the fuel cell from involving steam, it is extremely difficult to exclude the steam completely in the case that the humidity becomes high under the influence of season or nature of the locality. Further, it is also assumed that the steam is mixed to the air by the breakage of a part of cells. In such a case, there is a fear that a necessity for exchanging not only the damaged cell but also all cells of which interconnectors deteriorate on exposure to the steam is arisen. Then, as far as hydrogen or hydrocarbon is used as the fuel gas to be supplied to the fuel cell, it is impossible to contain no steam in the fuel electrode side. Thus, to use lanthanum calcium chromite-based perovskite type oxide as the interconnector which is formed on the porous fuel electrode is impossible.

Therefore, this invention aims to provide a film formed article capable of inhibiting the corrosion of a film member which comprises lanthanum chromite-based perovskite type oxide which includes calcium in its composition by the steam, and inhibiting the outflow of calcium and chromium which have been included in the film member.

### Means for solving the problems

In order to achieve the purpose, the film formed article according to the present invention comprises a lanthanum chromite-based perovskite type oxide which includes calcium in its composition and which is intended to place in an atmosphere where steam exists, and a protective layer which is formed as film on a surface of the oxide, which comprises as a main ingredient a single phase perovskite type oxide and which possesses electronic conduction properties. Where, the protective layer comprises as the main ingredient the following perovskite type oxide:

(A₁₋ₓBₓ)_{1-z}(D_{1-y}E_{y})O₃

wherein A is one or more elements selected from a group of elements of scandium (Sc), yttrium (Y) and lanthanoids; B is one or more elements selected from a group of alkaline earth metal elements other than radium (Ra); and D and E are individually one or more elements selected from a group of transition metal elements which belong to the fourth, fifth and sixth periods of the periodic table except platinum (Pt) and radioelements, and typical metal elements except 1A family elements, mercury (Hg), radium (Ra) and polonium (Po); and 0≦x≦1,0≦y≦0.5 and -0.05≦z≦ 0.1, providing that when B is calcium (Ca) D is not chromium (Cr).

Thus, the protective layer of the above mentioned composition forms a dense film having electrical conductivity. Since the denseness of the film is so high that the steam can not permeate therethrough, it is possible to arrest the corrosion of the film member of the lanthanum chromite-based perovskite type oxide which includes calcium in its composition by the steam, and the outflow of calcium and chromium due to the formation of Ca₅(CrO₄)₃OH. By these facts, the formation of pores in the film member which has been formed as dense form can be inhibited, and the denseness can be maintained stably. The reason for providing that when B is calcium (Ca) D is not chromium (Cr) is that the function as the protective layer that protects the film member which comprises the lanthanum chromite-based perovskite type oxide which includes calcium in its composition can not be attained in such a combination of Ca and Cr, because in this combination the protective layer has an analogous composition with the film member (lanthanum chromite-based perovskite type oxide which includes calcium in its composition) and as a result of this fact these physical properties also come to show similarities. However, when D is the element other than Cr, Cr can be adaptable as E in any combination which is stable under the steam atmosphere.

In addition, from a viewpoint of bring the thermal expansion coefficient of the protective layer close to those of the other cell constitutive members, and a viewpoint of enhancing the electronic conductivity which is necessitated for the protective layer, it is preferable that the material for the protective layer is represented by a chemical formula:

(A₁₋ₓBₓ)_{1-z}(D_{1-y}E_{y})O₃

wherein A is one or more elements selected from a group of elements of scandium (Sc), yttrium (Y) and lanthanoids; B is one or more elements selected from a group of magnesium (Mg), calcium (Ca), strontium (Sr) and barium (Ba), D is one or more elements selected from a group of transition metal elements which belong to 6A, 7A and 8 family elements in the fourth period of the periodic table; and E is one or more elements selected from a group of transition metal elements which belong to the fourth, fifth and sixth periods of the periodic table except platinum (Pt) and radioelements, and typical metal elements except 1A family elements, mercury (Hg), radium (Ra) and polonium (Po); and 0≦x≦1, 0≦y≦0.5 and -0.05≦z≦0.1, (providing that when B is calcium (Ca) D is not chromium (Cr)).
More preferably, it is represented by (A₁₋ₓBₓ)_{1-z}(D_{1-y}E_{y})O₃ wherein A is one or more elements selected from a group of elements of scandium (Sc), yttrium (Y) and lanthanoids; B is one or two elements selected from a group of elements of strontium (Sr) and calcium (Ca), D is one or more elements selected from a group of transition metal elements which belong to 6A, 7A and 8 family elements in the fourth period of the periodic table; and E is one or more elements selected from a group of transition metal elements which belong to the fourth period of the periodic table; and 0≦x≦1, 0≦y≦0.5 0≦y≦0.5 and -0.05≦z≦0.1 (providing that when B is calcium (Ca) D is not chromium (Cr)).
Most preferable, it is represented by (La₁₋ₓSrₓ)_{1-z}(D_{1-y}E_{y})O₃, wherein D is one or more elements selected from a group of transition metal elements which belong to 6A, 7A and 8 family elements in the fourth period of the periodic table; and E is one or more elements selected from a group of transition metal elements which belong to the fourth period of the periodic table; and 0≦x≦1, 0≦y≦0.5 and -0.05≦z≦0.1.

Since the effectiveness about the material for the protective layer of (La₁₋ₓSrₓ)_{1-z}MnO₃ was actually confirmed by experiments, similar effects can be expected in the cases that a part of or all of the elements which compose (La₁₋ₓSrₓ)₁₋₂MnO₃ are respectively substituted by one or more elements which are known as elements showing same or analogical properties with the element to be substituted.

Further, the film formed article according to the present invention comprises a protective layer which is formed as film on a surface of an interconnector of a fuel cell, wherein the interconnector is made of a lanthanum chromite-based perovskite type oxide which includes calcium in its composition, wherein the protective layer comprises as a main ingredient a single phase perovskite type oxide and which possesses electronic conduction properties, and wherein the single phase perovskite type oxide is represented by the chemical formula:

(A₁₋ₓBₓ)_{1-z}(D_{1-y}E_{y})O₃

wherein A is one or more elements selected from the group of elements of scandium (Sc), yttrium (Y) and lanthanoids; B is one or more elements selected from the group of alkaline earth metal elements other than radium (Ra); and D and E are individually one or more elements selected from the group of transition metal elements which belong to the fourth, fifth and sixth periods of the periodic table except platinum (Pt) and radioelements, and typical metal elements except 1A family elements, mercury (Hg), radium (Ra) and polonium (Po); and 0≦x≦1, 0≦y≦0.5 and -0.05≦z≦0.1, providing that when B is calcium (Ca) D is not chromium (Cr).

Thus, it is possible to arrest the corrosion of the interconnector film by the steam, and the outflow of calcium and chromium from the interconnector film due to the formation of Ca₅(CrO₄)₃OH. By these facts, the formation of pores in the interconnector film which has been formed as dense form on the fuel electrode can be inhibited, and various properties of the interconnector film such as the denseness, electrical conductivity, and consistency of the thermal expansion behavior to the other members, etc., can be maintained stably. Namely, it is possible to realize the long-term stability of the properties necessitated for the interconnector. In addition, regarding the case of stacking the cells, when the steam is mixed with air or the fuel gas, which is caused, for example, by the breakage of a part of cells, it is possible to avoid the necessity for exchanging all cells as far as the protective layers are provided to the interconnector films in each cells. Because the individual cells can acquire the resistance to water vapor (resistance to humid atmosphere) by virtue of the protective layer, and thus the cell stacks can be restored by exchanging only the damaged cell.

Further, the film formed article according to the present invention may be provided with an intermediate layer which sustains electrical conductivity and water vapor resistance in the reducing atmosphere, between the interconnector and the fuel electrode.

Although in the solid oxide fuel cell the interconnector which contacts with the fuel electrodes is exposed to the reducing atmosphere, even in such a condition, it is possible to arrest the corrosion of the interconnector film by the steam at when excessive steam are entrained into the porous fuel electrode, and the outflow of calcium and chromium from the interconnector film due to the formation of Ca₅(CrO₄)₃OH, while maintaining the electrical conductivity. Thus, the formation of pores in the interconnector can be inhibited, and the denseness of the interconnector can be maintained stably.

### Brief description of the drawings

[Fig. 1] is a constructive view which illustrates an embodiment of the film formed article according to the present invention.
[Fig. 2] is an oblique perspective view which illustrates an constructive example of the flat type solid oxide fuel cell.
[Fig. 3] is a flow chart which illustrates a method for manufacturing the film formed article according to the present invention.
[Fig. 4] is a central longitudinal sectional view where the outline constitution of the experimental apparatus for the measurement examination of the power generation performance of single cell is shown.
[Fig. 5] is a graph where a change of the voltage loss of the interconnector of the solid oxide fuel cell that applies this invention is shown along time lapse.
[Fig. 6] is a schematic side view which illustrates one example of construction of the cell stack of the flat type solid oxide fuel cell.

### Explanation of numerals

- 1: Single cell
- 2: Fuel electrode (Base member)
- 3: Electrolyte film
- 4: Air electrode film
- 5: Interconnector film (Film member)
- 6: Intermediate layer
- 7: Protective layer

### Best mode for carrying out the invention

Now, the constitution of the present invention will be described in detail based on the embodiments illustrated in the drawings.

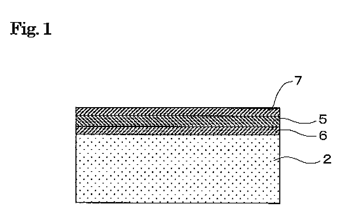

One embodiment of the film formed article according to the present invention is illustrated in Fig. 1 to Fig. 6. According to the film formed article of the present invention, a protective layer 7 is formed on a surface of a lanthanum chromite based perovskite type oxide which includes calcium in its composition and which is intended to place in an atmosphere where steam exists.

Further, according to the film formed article of the present invention, in the film formed article where a film member 5 made of a lanthanum chromite-based perovskite type oxide which includes calcium in its composition is formed to a base member 2 which includes zirconia in its composition, an intermediate layer 6 is formed as film on the base member 2, and the film member 5 is formed on the intermediate layer 6.

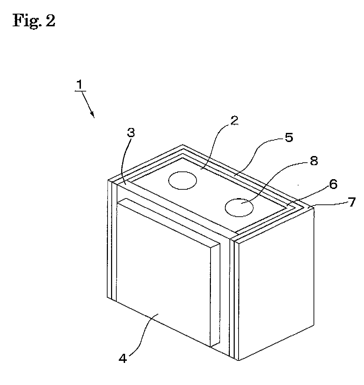

In this embodiment, an explanation will be made about an example wherein the present invention is applied to the film formation of the interconnector film 5 to the fuel electrode 2 in the flat type solid oxide fuel cell execution form. In this embodiment, the fuel electrode 2 corresponds to the base member, and interconnector film 5 corresponds to the film member. In this flat type solid oxide fuel cell, for instance, as shown in Fig. 2, the fuel electrode 2 which functions as a supporting member (base member), an electrolyte film 3 which is formed on one face of the fuel electrode 2, an air electrode film 4 which is formed on the electrolyte film 3, and the interconnector film 5 which is formed on another face of the fuel electrode 2 constitute a single cell 1. In this single cell 1, the fuel electrode 2 is made of a board member in order to secure the strength of single cell 1 by this fuel electrode 2, and the electrolyte 3, the air electrode 4 and the interconnector 5 are formed respectively as membranous structure. For instance, film thicknesses of the electrolyte film 3, the air electrode film 4 and the inter connector film 5 are set individually so as to be about 1*µ*m-100*µ*m (for instance, the electrolyte film 3 is to be about 30*µ*m, the air electrode film 4 about 100 *µ*m, and the interconnector film 5 about 40 *µ*m, respectively), while the board thickness of the fuel electrode 2 as the base member is set so as to be several millimeters (for instance, about 1-10 mm). Incidentally, since the fuel electrode 2 is prepared as a porous form, the distribution of fuel gas is ensured sufficiently. In order to supply the fuel gas to the fuel electrode 2 more excellently, however, for instance, in this embodiment, gas pathways 8 through which the fuel gas distributes are provided in the fuel electrode 2.

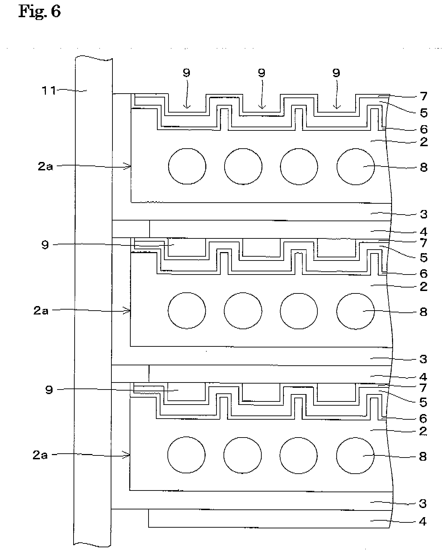

As the material for the fuel electrode in this embodiment, for example, a mixture of nickel oxide (where it changes into a metallic nickel under the operating state of the fuel cell) and stabilized zirconia in which 8 mol% of yttria is solved so as to form solid solution in order to stabilize the crystalline structure (NiO-8YSZ(Zr_{0.92}Y_{0.08}O₂) cermet) is used. This mixture material of nickel and yttria stabilized zirconia (YSZ) has been generally used as the fuel electrode material of the solid oxide fuel cell. The fuel electrode 2 may compose of, for instance, a porous rectangular board member. This porous board member is formed so that the fuel gas may be able to distribute sufficiently therethrough, and the member may be able to provide an ample strength necessitated for the single cell 1 and to have an ample electrical conductivity for electron and oxygen ion. Incidentally, by making the fuel electrode 2 into a porous form, it is possible to enhance the power generation performance because the contact area to the solid electrolyte in the unit area of the electrode material can be enlarged. Moreover, it is also possible to heighten the strength against the thermal stress and the external force. In addition, because the cell stack can be made with a high strength, it is possible to improve the power generation performance of the cell stack when expanding the size of the porous fuel electrode 2, or the like. One embodiment of the constitution of the cell is illustrated in Fig. 6. In this figure, the numeral 2a denotes the side part of the fuel electrode, the numeral 9 denotes the air pathway, the numeral 11 denotes manifold board, respectively.

As the material which is to be used for, the fuel electrode 2, the material for fuel electrode according to the invention of which patent application has been already filed by the identical applicant is especially desirable. This material for fuel electrode material is a mixture of YSZ coarse particles which have relatively large particle sizes, YSZ minute particles which have relatively small particle sizes, and nickel oxide or nickel particles (See, JP 2004-71360 A and JP HEI8(1996)-306361 A). When using this mixture, since a framework can be formed in the interior of the fuel electrode 2 with the YSZ coarse particle, it is possible to enhance the strength of the single cell 1. In addition, since the change of porosity and the shrinkage of the volume in the high temperature and reducing atmosphere can be repressed specifically, it is possible to elongate the life time of the fuel electrode 2 and maintain the superior performance of the fuel electrode stably for a long time.

In the case that this fuel electrode 2 is prepared, the nickel oxide and the YSZ's are mixed, then, a binder such as methyl cellulose and polyvinyl alcohol is added thereto, and which may be followed by press molding. Alternatively, this mixture material of nickel oxide, YSZ's and the binder is brought into a clayey form, and the mixture material may be subject to extrusion molding. Then, the obtained molding material is sintered at about 1400 °C in order to obtain the porous fuel electrode 2. Here, the manufacturing conditions such as the pressure in the press or extrusion molding and the sintering temperature is adjusted so that the porous fuel electrode 2 to be obtained has a porosity capable of allowing the fuel gas to pass easily through the electrode, and provides a mechanical strength necessitated as the single cell 1. Here, when the mechanical strength of the porous fuel electrode 2 is set to be weaker than that of a solid body of the same material, the strength of the cell stack can be improved because it is possible to absorb and alleviate the thermal stress on the power generating operation of the cell stack.

However, the material for the fuel electrode 2 is not limited to the above-mentioned example. For instance, as the materials to be used for the fuel electrode 2, iron (Fe) and copper (Cu) can be mentioned preferably as an alternative to nickel (Ni), and SSZ (for example, Zr_{0.89}Sc_{0.1}Ce_{0.01}O₂) can be mentioned preferably as an alternative to YSZ. In addition, a material which is prepared by mixing two kinds of metals such as lVi-Fe-SSZ is also desirable.

The interconnector material in this embodiment is calcium-doped lanthanum chromite-based perovskite type oxide (LCO). This lanthanum chromite-based perovskite type oxide can be represented, for example, by a following composition formula.

(La₁₋ₓCaₓ)_{1-z}(Cr_{1-y}A_{y})O₃ <Chemical formula 1>

In the above formula 1, a part of lanthanum (La) may be substituted by one or more elements selected from a group of 3A family elements (Sc, Y, and lanthanoids (Ce, Pr, Nd, Sm, Eu, Gd, Tb, Dy, Ho, Er, Tm, Yb, Lu)) other than lanthanum (La) and except promethium (Pm) and actinoids which are radioelements. A part of calcium (Ca) may be substituted by one or more elements selected by a group of alkaline earth metal elements (Be, Mg, Sr, Ba) except radium (Ra) which is a radioelement. The A in the above formula 1 is one or more elements, such as cobalt (Co) and magnesium (Mg), which can be substituted with a part of chromium (Cr). Further, the x, y, and z in the above formula 1 take the ranges of 0<x≦0.5, 0≦y≦0.5, and -0.05≦z≦0.1, respectively. In the formula 1, the case when y=0 ((La₁₋ₓCaₓ)_{1-z}CrO₃) is involved.

For instance, in this embodiment, the used as the interconnector material is La_{0.75}Ca_{0.27}Cr_{0.9}Co_{0.1}O₃, which has been generally used as this material. In fact, this material is made of mixed phases of (La,Ca)(Cr,Co)O₃ and CaO, and which is intended to form a dense film by virtue of adding a small amount of excessive CaO.

The protective layer 7 in this embodiment plays the role of protecting the interconnector film 5 which is exposed in the atmosphere where steam exists. By providing the protective layer 7, it is possible to arrest the corrosion of the interconnector film by the steam, and the outflow of calcium and chromium from the interconnector film due to the formation of Ca₅(CrO₄)₃OH, under the condition where the temperature is 1000 °C and excessive steam of the oxidizing atmosphere exists, the condition being the power generation condition of SOFC. Particularly, La_{0.75}Ca_{0.27}Cr_{0.9}Co_{0.1}O₃ used as the interconnector material in this embodiment contains calcium excessively, and thus it tends to be corroded by steam with ease. Even in such a case, by the protective layer 7, the corrosion can be prevented. As the material for such a protective layer 7, for example, a material which comprises as a main ingredient a single phase perovskite type oxide represented by the following composition formula and which possesses electronic conduction properties.

(A₁₋ₓBₓ)_{1-z}(D_{1-y}E_{y})O₃ <Chemical formula 2>

In the above formula 2, the A is one or more elements selected from a group of elements of scandium (Sc), yttrium (Y), and lanthanoids (La, Ce, Pr, Nd, Sm, Eu, Gd, Tb, Dy, Ho, Er, Tm, Yb, Lu) except radioelements. The B is one or more elements selected from a group of alkaline earth metal elements (Be, Mg, Ca, Sr, Ba) except radium (Ra) which is a radioelement. The D and E are individually one or more elements selected from a group of transition metal elements(Sc, Ti, V, Cr, Mn, Fe, Co, Ni, Cu, Y, Zr, Nb, Mo, Ru, Rh, Pd, Ag, lanthanoids, Hf, Ta, W, Re, Os, Ir, Au) which belong to the fourth, fifth and sixth periods of the periodic table except platinum (Pt) and radioelements, and typical metal elements (Be, Mg, Ca, Sr, Ba, Zn, Cd, Al, Ga, In, Tl, Ge, Sn, Pb, Sb, Bi) except 1A family elements, mercury (Hg), radium (Ra) and polonium (Po).

Further, the x, y and z in the above formula 2 can take the ranges of 0≦x≦1, 0≦y≦0.5, and -0.05≦z≦0.1, respectively. More preferably, -0.05≦z≦0. In the formula 3, the cases when x=0 and/or y=0 ((A)_{1-z}(D_{1-y}E_{y})O₃,(A₁₋ₓBₓ)_{1-z}(D)O₃,(A)_{1-z}(D)O₃) are involved. As mentioned above, it is possible that the respective sites of A, B, D and E in the above formula 2 may comprise not only a single element, but also a composition where a part of the element concerned as above is substituted with other one or more elements, individually. Namely, it is possible to take such a composition as ((A,A')₁₋ₓ(B,B')ₓ)_{1-z}((D,D')_{1-y}(E,E')_{y})O₃. For instance, [(La_{0.7}Y_{0.1})(Sr_{0.1}Ca_{0.1})][(Mn_{0.8}Fe_{0.1})(Ti_{0.05}V_{0.05})]O₃ may be adaptable.

However, in the above formula 2, the combination that when B is calcium (Ca), D is chromium (Cr) should be excluded. The reason is that the function as the protective layer 7 that protects the interconnector film 5 can not be attained in such a combination, because in this combination the protective layer 7 has an analogous composition with the interconnector film 5 (lanthanum chromite-based perovskite type oxide which includes calcium in its composition) and as a result of this fact these physical properties also come to show similarities. However, when D is the element other than chromium (Cr), Cr can be adaptable as E in any combination which is stable in the steam atmosphere.

Next, from a viewpoint of bring the thermal expansion coefficient of the protective layer close to those of the other cell constitutive members, and a viewpoint of enhancing the electronic conductivity which is necessitated for the protective layer 2, more desirable compositions of the above formula 3 will be described. With respect to the B of the above formula 3, it is more desirable to be one or more elements selected from a group of alkali earth metal elements (Mg,Ca,Sr,Ba) except beryllium (Be) and radium (Ra) which is a radioelement. With respect to the D of the above formula 2, it is more desirable to be one element or any combination of two or more elements, wherein the element or elements are selected from a group of transition metal elements (Mn, Co, Fe, Ni, Cr) which belong to 6A, 7A and 8 family elements in the fourth period of the periodic table. Furthermore, it is most desirable that the B in the above formula 2 is strontium or calcium or the combination thereof. In addition, the E in the above formula 2 is most desirable to be one or more elements selected from a group of transition metal elements (Sc, Ti, V, Cr, Mn, Fe, Co, Ni, Cu)which belong to the fourth period of the periodic table.

Especially, (La₁₋ₓSrₓ)_{1-z}(D_{1-y}E_{y})O₃, which is a composition that in the above formula 2 the A is lanthanum (La) and the B is strontium (Sr), possesses good physical properties as the protective layer 7, that is, it has a high electronic conduction, a thermal expansion coefficient which is analogous to those of the other materials for constituting the cell, as well as a good resistance to water vapor (resistance to humid atmosphere). Further, it was confirmed that the compound shows excellently the function of arresting the corrosion of the interconnector film by the steam, and the function of arresting the outflow of calcium and chromium from the interconnector film due to the formation of Ca₅(CrO₄)₃OH, by experiments. For instance, in this embodiment, La_{0.6}Sr_{0.4}MnO₃ is used as the material for the protective layer 7.

Although the perovskite type oxide represented by the above formula 2 has a fear that the electrical conductivity deteriorates when using it in the reducing atmosphere, the deterioration of the electrical conductivity can not be observed in the oxidizing atmosphere and it is stable as the perovskite type oxide. Thus it is suitable for insulating steam between the interconnector film 5 and the air electrode 4 side

With respect to the material for the protective layer, it is most preferable to use a perovskite type oxide represented by the above formula 2 alone. However, the material may be a mixture of two or more compounds of the perovskite type oxides, or a composition which includes as a main ingredient the perovskite type oxide represented by the above formula 2, namely, a mixture which includes the perovskite type oxide represented by the above formula 2. For instance, a substance which can not affect a detrimental effect to the material for the interconnector, and which carries preferable physical properties such as electrical conductivity, thermal resistance, corrosion resistance, and oxidation resistance, etc., may be mixed with the perovskite type oxide represented by the above formula 2 in order to prepare the material for the protective layer.

Further, as for the material for the protective layer, a denseness may be required to the extent that the protective layer does not allow water vapor to pass through it- By enhancing the denseness of the protective layer, it is possible, with more reliability, to arrest the corrosion of material for interconnector 5 by the steam, and to arrest the outflow of calcium and chromium from the interconnector film due to the formation of Ca₅(CrO₄)₃OH. Therefore, it is further possible, with more reliability, to prevent the degression of electrical conductivity of the interconnector, and to inhibit the formation of pores in the interconnector which should be dense.

In the solid oxide type fuel cell in this embodiment, the interconnector 5 which contains the lanthanum chromite-based perovskite type oxide which includes calcium in its composition and which is contact with the fuel electrode 2 is compelled to expose the reducing atmosphere. Further, in the fuel gas which is supplied to the fuel electrode 2 may contain steam. In such a case, the interconnector 5 is corroded by the steam and produces Ca₅(CrO₄)₃OH, and then calcium and chromium flows out from the interconnector 5. As a result, such a problem that pores are formed in the interconnector 5, and the denseness thereof can not be maintained may arise. Therefore, it is preferable to provide the intermediate layer 6 between the interconnector layer 5 and the fuel electrode 2. The intermediate layer 6 plays a role of preventing the corrosion of the interconnector layer 5 by the steam when excessive steam is entrained into the porous fuel electrode, and preventing the outflow of calcium and chromium from the interconnector due to the formation of Ca₅(CrO₄)₃OH. As a result, the formation of pores in the interconnector can be inhibited, and the denseness of the interconnector can be maintained stably. As the material for such an intermediate layer 6, for example, a material which comprises as a main ingredient a single phase perovskite type oxide represented by the following composition formula is effective.

(A₁₋ₓBₓ)_{1-z}(Ti_{1-y}D_{y})O₃ <Chemical formula 3>

The A in the above formula 3 is one or more elements selected from a group of alkaline earth metal elements (Be, Mg, Ca, Sr, Ba) except radium (Ra) which is a radioelement. Incidentally, in this specification, beryllium (Be) and magnesium (Mg) should be involved in the alkali earth metal elements. The B is one or more elements selected from a group of elements of scandium (Sc), yttrium (Y) and lanthanoids (La, Ce, Pr, Nd, Sm, Eu, Gd, Tb, Dy, Ho, Er, Tm, Yb, Lu) except radioelements. The D is one or more elements selected from a group of transition metal elements (Sc, Ti, V, Cr, Mn, Fe, Co, Ni, Cu, Y, Zr, Nb, Mo, Ru, Rh, Pd, Ag, lanthanoids, Hf, Ta, W, Re, Os, Ir, Au) which belong to the fourth, fifth and sixth periods of the periodic table except platinum (Pt) and radioelements, and typical metal elements (Be, Mg, Ca, Sr, Ba, Zn, Cd, Al, Ga, In, Tl, Ge, Sn, Pb, Sb, Bi) except 1A family elements, mercury (Hg), radium (Ra) and polonium (Po). Further, the x, y and z in the above formula 3 can take the ranges of 0<x≦0.5, 0≦y≦0.5, and -0.05≦z≦0.1, respectively. Further, from a viewpoint of enhancing the electrical conductivity, to be 0≦z≦0.1 is preferable. When z≠0, there are some combinations incapable of becoming the perovskite type oxide. Therefore, from the viewpoint of obtaining the perovskite type oxide with ease, it is preferable to set z=0- In the formula 2, the case when y=0 ((A₁₋ₓBₓ)_{1-z}Ti₁O₃) is involved. As mentioned above, it is possible that the respective sites of A, B and D in the above formula 2 may comprise not only a single element, but also a composition where a part of the element concerned as above is substituted with other one or more elements, individually. Namely, it is possible to take such a composition as ((A,A')₁₋ₓ(B,B')x)_{1-z}(Ti_{1-y}(D,D')_{y})O₃. Moreover, the composition for which a part of titanium (Ti) element is substituted with other one or more elements can be taken.

In addition, from a viewpoint of bring the thermal expansion coefficient of the intermediate layer close to those of the other members, and a viewpoint of enhancing the electrical conductivity necessitated for the intermediate layer 6,and improving the chemical stability, or the like, it is preferable to use (Sr₁₋ₓBₓ)_{1-z}(Ti_{1-y}D_{y})O₃, which belongs to the A in the above formula 3 is strontium (Sr). It is more desirable that the D in (Sr₁₋ₓBₓ)_{1-z}(Ti_{1-y}D_{y})O₃ is one or more element selected from a group of 5A family elements(vanadium (V), niobium (Nb), tantalum (Ta)). Especially, it was confirmed that (Sr₁₋ₓLaₓ)_{1-z}(Ti_{1-y}Nb_{y})O₃ showed good physical properties as the intermediate layer 6, that is, it has a thermal expansion coefficient which is analogous to those of the other materials for constituting the cell. For instance, in this embodiment, (Sr_{0.9}La_{0.1})(Ti_{0.9}Nb_{0.1})O₃ is used as the material for the intermediate layer 6.

Although the perovskite type oxide represented by the above formula 3 has a fear that the electrical conductivity deteriorates when using it in the oxidizing atmosphere, the deterioration of the electrical conductivity can not be observed in the reducing atmosphere and it is stable as the perovskite type oxide. Thus it is suitable for insulating the steam between the interconnector material 5 and the fuel electrode 2.

With respect to the material for the intermediate layer, it is most preferable to use a perovskite type oxide represented by the above formula 3 alone- However, the material may be a mixture of two or more compounds of the perovskite type oxides, or a composition which includes as a main ingredient the perovskite type oxide represented by the above formula 3, namely, a mixture which includes the perovskite type oxide represented by the above formula 3. For instance, a substance which can not affect a detrimental effect to the material for the fuel electrode and the material for the interconnector, and which carries preferable physical properties such as electrical conductivity, thermal resistance, corrosion resistance, and oxidation resistance, etc., may be mixed with the perovskite type oxide represented by the above formula 2 in order to prepare the material for the intermediate layer. For instance, a dense interconnector film 5 can be obtained without ruining the whole electrical conductivity by mixing a metal which can not affect a detrimental effect to LCO, NiO and YSZ to the perovskite type oxide represented by the above formula 3. Further, in the case that the cell is used in a high temperature and reducing atmosphere and a metal oxide can be changed to metal by reduction, it is possible to mix the metal oxide with the perovskite type oxide represented by the above formula 3- As metals and metal oxides which can be mixed with the perovskite type oxide represented by the above formula 3, for example, transition metals which belong to 8 and 1B family elements in the fourth period of the periodic table, and oxides thereof can be cited, and the use of Ni, Fe, Cu and oxides thereof is particularly desirable. With respect to the mixing ratio of the metal or metal oxide to the material for intermediate layer, for example, it is preferable to be in the range of not more than 50 % by volume of the whole of the materials for the intermediate layer.

Further, as for the material for the intermediate layer, from a viewpoint of enhancing the resistance to water vapor (resistance to humid atmosphere), it is preferable to use as the material for the intermediate layer the perovskite type oxide represented by the above formula 3 alone as much as possible, without adding the above mentioned metal or metal oxide, so as to obtain a film which has a denseness to the extent that it does not allow water vapor to pass through it. By enhancing the denseness of the intermediate layer, it is possible, with more reliability, to arrest the corrosion of material for interconnector 5 by the steam, and to arrest the outflow of calcium and chromium from the interconnector film due to the formation of Ca₅(CrO₄)₃OH. Therefore, it is further possible, with more reliability, to prevent the degression of electrical conductivity of the interconnector, and to inhibit the formation of pores in the interconnector which should be dense.

By using the materials as mentioned above, film formations of the intermediate layer 6, the interconnector film 5 and the protective film 7 are performed on the fuel electrode 2 as the base member in that order. For the film formations, any known or new film formation method, such as the slurry coating method, the coating and thermal decomposition method, the slurry spraying and decomposition method, the sol-gel method, the dipping method (dip-coating method), the spin coating method, the tape casting method, the screen printing method, the chemical vapor deposition method (CVD), the physical vapor deposition method (PVD), the electrophoretic deposition method (EPD), the electro-chemical vapor deposition method (EVD),the EVD-CVD method, the vacuum deposition method, the ion plating method, the spattering method, the laser ablation method, the plasma spraying method, the atmospheric plasma spraying method, the vacuum plasma spraying method, the co-sintering method (It is a concurrently sintering method wherein the fuel electrode 2 in the state of a green form and a green film which is prepared by the tape casting method and attached to the green fuel electrode are sintered at the same time.), or the like, may be used.

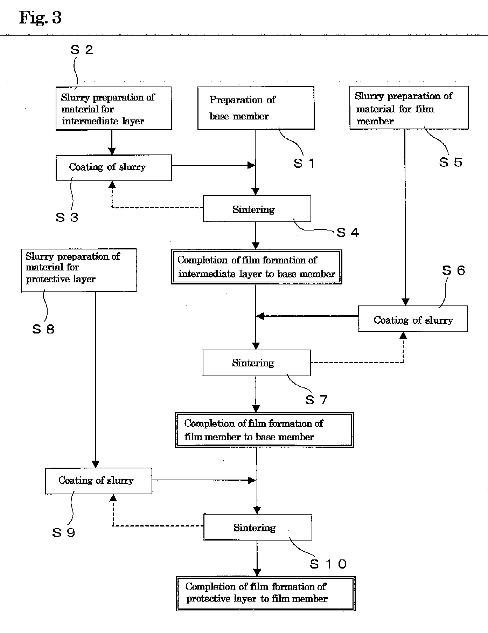

By the slurry coating method, the intermediate layer 6, the interconnector film 5 and the protective film 7 are formed on the fuel electrode 2. Fig. 3 shows this procedure. That is, the intermediate layer 6 is formed as film on the fuel electrode 2, by preparing a fuel electrode 2 which functions as the base member with a material for the fuel electrode (S1), slurrying a material for the intermediate layer (S2), coating the obtained slurry to the fuel electrode 2 as the base member (S3), subjecting the coated article to thermal treatment (sintering) (S4). Next, the interconnector layer 5 is formed as film on the intermediate layer 6 by slurrying a material for the interconnector (S5), coating the obtained slurry to the intermediate layer 6 (S6), and subjecting the coated article to thermal treatment (sintering) (S7), Then, the protective layer 7 is formed as film on the interconnector layer 5, by slurrying a material for the protective layer (S8), coating the obtained slurry to the interconnector film 5 (S9), subjecting the coated article to thermal treatment (sintering) (S10). In the case of utilizing the slurry coating method is used, there is an advantage that it does not seek equipments on a large scale and thus it is economical, as compared with the physical vapor deposition method, the chemical vapor deposition method, the electro-chemical vapor deposition method, and the flame spraying methods, etc. In addition, another advantage that the film thickness is easily controlled by adjusting the concentration of the slurry, and regulating the frequency of slurry coating and sintering is also provided. To control the film thickness by the concentration of the slurry and the frequency of slurry coating and sintering can bring many preferable effects, such as an enhancement in yield, an improvement in the performance of the fuel cell by realizing more thinner shape, and a cost reduction which can be attained by decreasing the amount of wasted material on the basis of the fact that the amount necessitated for preparing a dense film having the required thickness becomes obvious, etc.

With respect to the respective thicknesses of the protective layer 7, the intermediate layer 6, and the interconnector film 5, the thinner they become, the more they are preferable from the viewpoint of the electric resistance which becomes small. However, if the interconnector film 5 is extremely thin, there is a fear that the film does not carry out the functions necessitated for the interconnector film itself, such as the function of separating the fuel gas from the air. If the intermediate layer 6 and the protective layer 7 are extremely thin, there is a fear that the material for interconnector is corroded by the steam, which is accompanied with the chemical reaction of producing Ca₅(CrO₄)₃OH, and the outflow of calcium and chromium from the interconnector material. Incidentally, the minimum film thickness capable of preparing a dense film may be varied by the method for film formation to be used. It is because the thickness to be able to form a dense film depends on which film formation method is chosen. When the slurry coating method is adopted as the film formation method, it is desirable to assume the film thicknesses of the protective layer 7, the intermediate layer 6, and the interconnector film 5 to be not less than 5 *µ*m, individually. Further, it is more desirable that the film thickness of the interconnector film 5 is larger than that of the intermediate layer 6 and that of the protective layer 7. Furthermore, with respect to the thicknesses of the intermediate layer 6 and the protective layer 7, it is preferable to be not more than 20 *µ*m, individually. More desirably, it is not more than 10 *µ*m, and most desirably, it is not more than 5 *µ*m. With respect to the thickness of the interconnector film 5, it is preferable to be not more than 40 *µ*m, more desirably, not more than 30 µm, and most desirably, not more than 20 *µ*m.

As for powder of the material for the intermediate layer, of the material for the interconnector, or of the material for the protective layer, to prepare a slurry, it is preferable to have particle sizes in the range of 0.1-5 *µ*m. Further, because a higher filling rate is theoretically ideal for preparing a dense film, it is preferable that in the powder relatively small particles and relatively large particles are blended with a good balance. For instance, in this embodiment, regarding the powder of (Sr_{0.9}La_{0.1})(Ti_{0.9}Nb_{0.1})O₃ which is the material for the intermediate layer, particles which have a mean particle size of 0.4 *µ*m, and particles which have a mean particle size of 2 *µ*m are blended with a volume ratio of 9:1. Further, with respect to the powder of (La_{0.75}Ca_{0.27})(Cro_{0.9}Co_{0.1})O₃ which is the material for the interconnector, the mean particle size is regulated to become to 0.7 *µ*m. Moreover, with respect to the powder of La_{0.6}Sr_{0.4}MnO₃ which is the material for the protective layer, the mean particle size is regulated to become to 0.9 *µ*m.

The solvent to be used for preparing a slurry of the material for the intermediate layer, of the material for the interconnector, or of the material for the protective layer, may not be especially limited, and, for instance, can be selected from among water or aqueous solutions (for instance, nitric acid aqueous solution, acetic acid aqueous solution, and aqueous solutions of organic acid salts, etc.),and organic solvents (for instance, toluene and isopropanol, etc.). Especially, the use of the organic solvent is desirable because there is no fear that the components of the material for the intermediate layer, the material for the interconnector, or the material for the protective layer are solved to the solvent. When the organic solvent is used, the addition of additives, such as binder, deflocculant, antifoaming agent, and dispersing agent, etc., may be permitted. On the other hand, when water or aqueous solution is used as a solvent, the addition of additives, such as binder, antifoaming agent, dispersing agent, thickener, and surfactant etc., may be permitted.

For instance, in this embodiment, all of the slurry for the intermediate layer 6, the slurry for the interconnector film 5, and the slurry for the protective layer 7 are prepared under the same condition, and, in order to attain the individually prescribed film thickness, the respective frequencies of coating and sintering of the slurry are regulated in accordance with the respective thicknesses. Incidentally, the lesser the coating amount of slurry per a time and the larger the number of the sintering, the denser film can be obtained.

Generally, the higher the sintering temperature, the denser film may be obtained. However, when the treatment is proceeded at a extremely high temperature, there is a fear that the physical properties of the fuel electrode 2 are changed, and thus it can function no longer as the fuel electrode 2. Therefore, it is desirable that the sintering temperature is about 1300-1500 °C. Moreover, the sintering time per a time is set to be about 1 - 10 hours, preferably, 1 - 3 hours, and the temperature rising or dropping rate is set to be at about 100 - 233 °C/hr, preferably about 200 °C/hr. For instance, in this embodiment, the sintering temperature is set to be 1400 °C, the sintering time per a time is set to be 3 hours, and the temperature rising or dropping rate is set to be at 200 °C/hr.

As the electrolyte film 3 which is intended to be provided between the fuel electrode 2 and the air electrode film 4, it is desirable, for example, to use a YSZ film which is dense to the extent that the fuel gas and air can not pass through. Incidentally, depending on the kind of the film forming method, YSZ of the electrolyte film 3 may be incorporated into numerous minute pores resided in the porous fuel electrode 2- Therefore, as compared with the case that the fuel electrode film 2 is formed onto the plate of YSZ as the conventional way, it is possible to enlarge the contacting area of the fuel electrode 2 with the electrolyte film 3 in order to increase the electrode reaction places and to establish many oxygen ion paths. Thus, it is possible to improve the performance of the solid oxide fuel cell. Although in this embodiment the electrolyte film 3 is made of YSZ, it is not limited thereto and it may use any known or new material capable of utilizing as the electrolyte film 3. For instance, scandia stabilized zirconia (Zr_{0.89}Sc_{0.1}Ce_{0.01}O₂(SSZ)) may be used as the electrolyte material. In this case, it is also possible to enlarge the contacting area between the electrolyte film 3 and the fuel electrode 2 in order to increase the electrode reaction places.

Air electrode film 4 is provided on the opposite side across the electrolyte film 3 from the porous fuel electrode 2 as shown in Fig. 2. This air electrode film 4 may be composed of a film of lanthanum strontium - manganite (compound of La, Sr, Mn, and O). This lanthanum - strontium - manganite has been generally used as the material for the air electrode in the solid oxide fuel cell. Furthermore, as the material to be used for the air electrode, the material for the air electrode according to the invention of which patent application has been already filed by the identical applicant is desirable (See, JP HEI4(1992)-149024A). Particularly, it is desirable to use powder of strontium doped lanthanum manganite wherein the respective elements of the main ingredient of the strontium doped lanthanum manganite are represented as (La₁₋ₓSrₓ)_{1-y}MnO_{3-z}, and satisfy 0.2≦x<0.4 and 0.025< y<0.05. Incidentally, although the subscript z is usually about ±0.1, the value of the z is varied depending on the temperature, the time, the nonstoichiometric amount y, and the substitution amount x. Thus, to define the value accurately does not bring a great sense, and the explanation in detail is omitted herein. According to this material, even in the vicinity of at the operating temperature of the fuel cell, the air electrode shows a single phase and it is chemically stable. Thus, the reactivity to YSZ is small, and a reaction product which can have a detrimental effect on the formation of the YSZ film and on the power generation performance at the power generation operation is not produced. Although in this embodiment the air electrode film 4 is made of the lanthanum - strontium - manganite, the material for the air electrode film 4 is not limited thereto, and as a matter of course any known or new material may be used as the material for the air electrode film. For instance, the material for the air electrode according to the invention of which patent application has been already filed by the identical applicant (See, Japanese patent application No. 2004-222580) and which includes zirconia (YSZ or SSZ, etc.) in its composition may be used. In this case, an improvement of the power generation performance can be attained by forming the air electrode with the film, and an enhancement of the strength against the thermal stress and external forces can be attained by simplifying the structure of the single cell 1.

As the film formation method for the electrolyte film 3 and the air electrode film 4, any known film formation method such as the slurry coating method, the coating and thermal decomposition method, or the sol-gel method, etc., can be used, and it is not limited to a specific method.

According to the present invention, the corrosion of the film member made of the perovskite type oxide which includes calcium in its composition by steam can be inhibited by the protective layer 7 and the intermediate layer 6, and thus the outflow of calcium and chromium from the film member 5 due to the formation of Ca₅(CrO₄)₃OH can be prevented- By these facts, the formation of pores in the interconnector film 5 which has been formed as dense form can be inhibited, and the denseness can be maintained stably. In addition, even when the steam is mixed with air or the fuel gas, which is caused, for example, by the breakage of a part of cells, it is possible to avoid the necessity for exchanging all cells as far as the protective layers are provided to the interconnector films in each cells. Because, the individual cells can acquire the resistance to water vapor (resistance to humid atmosphere) by virtue of the protective layer, and thus the restoration can be completed by exchanging only the damaged cell. Owing to the formation of the interconnector film 5 to the fuel electrode 2 via the intermediate layer 6, a good contact between the fuel electrode 2 and the interconnector film 5 via the intermediate layer 6 can be produced. In this case, because the contact resistance (electric resistance in the contact part) between the fuel electrode 2 and the interconnector can be greatly decreased, the power generation performance (power output per a single cell 1) can be improved. In addition, since the material for fuel electrode generally has a higher mechanical strength, a higher electrical conductivity, and a higher thermal conductivity, as well as a lower cost, as compared with the material for the air electrode, the formation of single cell by using the fuel electrode as the base member can improve the strength and the power generation performance of the fuel cell, and can reduce the manufacturing cost, as compared with the formation of the single cell by using the air electrode as the base member. In addition, since the operating temperature of the fuel cell can be set to about 1000 °C when the interconnector film 5 is made by LCO, the plant efficiency can be improved as compared with the case of using a metallic separator or a metallic interconnector where the operating temperature is obliged to become low. All in all, according to the present invention, it is possible to attain the cost reduction for manufacturing the solid oxide type fuel cell, realize the high-performance of the fuel cell and make the fuel cell compact.

Incidentally, there is a problem that the lanthanum and calcium which has been included in the material for the interconnector flows out into the fuel electrode in a high temperature atmosphere, and the flowed components induces a chemical reaction (solid phase reaction) with zirconia which has been included in the fuel electrode. Since the calcium which has been inherently included for obtaining a dense interconnector film is absorbed to the fuel electrode material through the diffusion and the solid phase reaction, pores are formed in the interconnector. Thus, it is impossible to form the dense interconnector intended. Further, when stacking the single cells, the interconnector of a certain cell is obliged to make contact with the air electrode of another cell. In this case, there is a fear that the calcium which has been included in the interconnector material flows out into the air electrode, and thus pores are formed in the interconnector, if a material which includes zirconia (for instance, YSZ, etc.) is used as an air electrode.

When the range of z in the perovskite type oxide represented by the chemical formula 3 which is a main ingredient of the intermediate layer 6 is set to be 0.05≦z≦0, so as to form a perovskite type oxide other than the A site defective type, it does not be allowed that Ca, as an alkaline earth metal element, are solved thereto so as to form solid solution. Therefore, not only the prevention of the corrosion of the interconnector film 5 by steam, the interconnector film being made of lanthanum chromite-based perovskite type oxide which includes calcium in its composition, and also the prevention of the outflow of calcium included in the interconnector film 5 to the fuel electrode 2, can be attained. That is, when -0.05≦z≦0, it is possible to attain the prevention of the corrosion of the interconnector 5 by steam and the prevention of the outflow of calcium included in the interconnector film 5 to the fuel electrode 2, simultaneously. Thus, the film member 5 made of lanthanum chromite-based perovskite type oxide which includes calcium in its composition is prevented from corroding by steam, and the calcium and chromium are prevented from flowing out from the interconnector 5, which outflow is due to the formation of Ca₅(CrO₄)₃OH. By these facts, the formation of pores in the interconnector film 5 which has been formed as dense form can be inhibited, and the denseness of the interconnector can be maintained stably. In addition, it is possible to inhibit the phenomena that the lanthanum and calcium which has been included in the material for the interconnector flows out into the fuel electrode under a high temperature atmosphere, and then the flowed components induces a chemical reaction (solid phase reaction) with zirconia which has been included in the fuel electrode. Therefore, it is possible to prevent that the calcium which has been inherently included for obtaining a dense interconnector film is absorbed to the fuel electrode material. Thus, the formation of pores in the interconnector film 5 by steam can be inhibited, and the dense interconnector film can be obtained.

Similarly, with respect to the protective layer 7, when the range of z in the perovskite type oxide represented by the chemical formula 2 which is a main ingredient of the protective layer 7 is set to be -0.05≦z≦ 0, so as to form a perovskite type oxide other than the A site defective type, it does not be allowed that Ca, as an alkaline earth metal element, are solved thereto so as to form solid solution. Therefore, not only the prevention of the corrosion of the film member by steam, the film member being made of lanthanum chromite-based perovskite type oxide which includes calcium in its composition, and also the prevention of outflow of calcium included in the material for interconnector to the air electrode 4 side, provided that the material including zirconia (for example, YSZ and SSZ, etc.) is used as the air electrode 4, can be attained. That is, when -0.05≦z≦0, it is possible to attain the prevention of the corrosion of the interconnector 5 by steam and the prevention of the outflow of calcium included in the interconnector film 5 to the air electrode 4, simultaneously. Thus, the film member made of lanthanum chromite-based perovskite type oxide which includes calcium in its composition is prevented from corroding by steam, and the calcium and chromium are prevented from flowing out from the interconnector 5, which outflow is due to the formation of Ca₅(CrO₄)₃OH. By these facts, the formation of pores in the interconnector film 5 which has been formed as dense form can be inhibited, and the denseness of the interconnector can be maintained stably. In addition, it is possible to inhibit the phenomena that the lanthanum and calcium which has been included in the material for the interconnector 5 flows out into the air electrode 4 made of a zirconia containing material (for example, YSZ, etc.), and to inhibit the formation of pores in the interconnector film 5, and to sustain the dense interconnector.

Although above mentioned embodiment is a preferable one of the present invention, this invention is not limited thereto, and various modifications and alternations can be done without deviating from the spirit or purport of the present invention- For instance, this invention is not limited to the application to the film formation for the interconnector on the fuel electrode 2 of the solid oxide type fuel cell. Even if a structure is a fuel cell other than the flat type and the solid oxide type, or it is a structure other than the fuel cell, the present invention can be applied to the structure, as far as the structure is necessitated to place a film member made of the lanthanum chromite- based perovskite type oxide which includes calcium in its composition in the atmosphere where steam exists.

Further, the material for the intermediate layer is not limited to the above-mentioned examples. In addition to the above mentioned material (titanium-based) perovskite type oxide, materials which possess an electronic conductivity, a thermal expansion coefficient which is analogous to those of other material, and a resistance to water vapor (resistance to humid atmosphere) may be used as the material for the intermediate layer. For example, it was confirmed by this applicant that titanium-based perovskite type oxides (for example, CaTi_{0.95}Nb_{0.05}O₃, etc.) and cerium-based fluorite type oxides (Ce_{0.8}Y_{0.2}O₂, etc.) and so on, illustrated as follows, are effective for the material of the intermediate layer (See, JP 2004-247087 A).

The titanium-based perovskite type oxides are represented by the following formula, for example.

(A2,B2)(Ti,C2)O₃ <Chemical formula 4>

Where, the A2 in the above formula 4 is one or more elements selected from a group of alkaline earth metal elements such as calcium (Ca), strontium (Sr), magnesium (Mg), and barium (Ba) and so on- The B2 in the above formula 4 is a metal capable of replacing a part of the A2 in the above formula 4, and which is, for example, one or more elements selected from a group of elements of Ln (it denotes lanthanoids' element (La, Ce, Pr, Nd, Pm, Sm, Eu, Gd, Tb, Dy, Ho, Er, Tm, Yb, Lu).), scandium (Sc), and yttrium (Y) and so on. The C2 in the above formula 4 is a metal capable of replacing a part of titanium in above formula 4, and which is, for example, one or more elements selected from a group of elements of niobium (Nb), iron (Fe), manganese (Mn), gallium (Ga), and scandium (Sc) and so on. By substituting the metal B2 for a part of the A2 of the above formula 4, and substituting the metal C2 for a part of titanium, the electrical conductivity in the intermediate layer 6 can be heightened, and thus the performance of the fuel cell can be enhanced. However, when not less than 50 % of titanium is replaced with the metal C2, a fear of degeneration in the physical may be arisen. Thus, it is preferable that the partial substitution of the metal C2 for titanium is not more than 50 % of titanium. Incidentally, it is possible that the both of or either of B2 and C2 in the above formula 4 are not contained in the compound. For example, calcium titanate (CaTiO₃) may be used for the material of the intermediate layer.

Besides, the cerium-based fluorite type oxides are represented by the following formula.

(Ce, A3)O₂ <Chemical formula 5>

Where, the A3 in the above formula 5 is a metal capable of replacing a part of cerium in the above formula, and which is, for example, one or more elements selected from a group of elements of yttrium (Y), gadolinium (Gd), scandium (Sc), and calcium (Ca) and so on. By substituting the metal A3 for a part of cerium of the above formula 5, the electrical conductivity in the intermediate layer 6 can be heightened, and thus the performance of the fuel cell can be enhanced. However, when not less than 50 % of cerium is replaced with the metal A3, a fear of degeneration in the physical may be arisen. Thus, it is preferable that the partial substitution of the metal A3 for cerium is not more than 50 % of cerium. Incidentally, it is possible that A3 in the above formula 5 is not contained in the compound.

Alternatively, the material for the intermediate layer as enumerated above may be a mixture which includes at least one of the titanium-based perovskite type oxide and the cerium-based fluorite type oxide. For instance, a substance which can not affect a detrimental effect to the material for the fuel electrode 2 and the material for the interconnector film 5, and which carries preferable physical properties such as electrical conductivity, thermal resistance, corrosion resistance, and oxidation resistance, etc., may be mixed with the titanium-based perovskite type oxide, or the cerium-based fluorite oxide, or the mixture of the titanium-based perovskite type oxide and cerium-based fluorite oxide in order to prepare the material for the intermediate layer. For instance, a dense interconnector film 5 can be obtained without ruining the whole electrical conductivity by mixing a metal which can not affect a detrimental effect to LCO, NiO, and YSZ (for example NiO, ferrous oxide (FeOₓ)), to Ce_{0.8}Y_{0.2}O₂, for instance, by mixing NiO 60 g to Ce_{0.8}Y_{0.2}O₂ abut 40g.

Incidentally, instead of La which is the raw material of the lanthanum-based material to be used for the material for the intermediate layer, the material for the interconnector, and the material for the protective layer, an intermediate product for lanthanum (lanthanum concerate) may be utilized from the viewpoint of cost reduction.

Although the constitution which includes the intermediate layer 6 is one preferable embodiment of the present invention, the present invention is not limited to such a constitution of having the intermediate layer 6. For instance, in the case that the film member made of the lanthanum chromite-based perovskite type oxide which includes calcium in its composition is not contact directly with the base member or other member which includes zirconia in its composition, or in the case that the base member is not porous structure which is exposed under steam atmosphere, the intermediate layer 6 may be omitted.

### Example

In accordance with the above-mentioned embodiment, a single cell was manufactured as follows (This single cell is called "single cell of Example".). Porous fuel electrode 2 as a base member was prepared by sintering a mixture of NiO-YSZ(Zr_{0.92}Y_{0.08}O₂) at 1400 °C. Then, onto the fuel electrode 2, a intermediate layer 6 was formed as film by the slurry coating method with using Sr_{0.9}La_{0.1},Ti_{0.9}Nb_{0.1}O₃ as the material for intermediate layer. Further, onto the intermediate layer 6, an interconnector film 5 was formed by the slurry coating method with using La_{0.75}Ca_{0.27}Cr_{0.9}Co_{0.1}O₃. Furthermore, onto the interconnector film 5, a protective layer 7 was formed as film by the slurry coating method with using La_{0.6}Sr_{0.4}MnO₃.

Incidentally, in the above processes, when preparing slurry, powder of the material for the intermediate layer (Sr_{0.9}La_{0.1}Ti_{0.9}Nb_{0.1}O₃) was obtained by using a planetary ball mill so that the particles having a mean particle size of 0.4 µm and the particles having a mean particle size of 2 µm were blended in the volume ratio of 9:1. Powder of the material for the interconnector layer (La_{0.75}Ca_{0.27}Cr_{0.9}Co_{0.1}O₃) was obtained by using a planetary ball mill so that the particles thereof had a mean particle size of 0-7 µm. Powder of the material for the protective layer (La_{0.6}Sr_{0.4}MnO₃) was obtained by using a planetary ball mill so that the particles thereof had a mean particle size of 0.9 µm. The compositions of the slurries individual for the intermediate layer 6, the interconnector film 5 and the protective layer 7 were, in common, to be 10 g of polyvinyl butyral as a binder, 10 ml of dibutyl phthalate as a plasticizer, 2 ml of fish oil as a deflocculant, 2ml of Triton X as an antifoaming agent, and 600 ml of toluene and 1200 ml of isopropanol as solvents, based on 100 g of the powder of the film forming material, as shown in Table 1, and were prepared by mixing thereof. The sintering conditions individual for the intermediate layer 6, the interconnector film 5 and the protective layer 7 were, in common, that the sintering temperature was 1400 °C, and the sintering time per a time was set to be 3 hours, and the temperature rising rate was set to be 200 °C/hr. Coating and sintering of the slurry for intermediate layer 6 were repeated 4 times, coating and sintering of the slurry for interconnector layer 5 were repeated 14 times, and coating and sintering of the slurry for protective layer 7 were repeated 7 times.

**[Table 1]**

| | |
|---|---|
| Film forming material | 100 g |
| Polyvinyl butyral (binder) | 10 g |
| Dibutyl phthalate (plasticizer) | 10 ml |
| Fish oil (deflocculant) | 2 ml |
| Triton X (antifoaming agent) | 2 ml |
| Toluene (solvent) | 600 ml |
| Isopropanol (solvent) | 1200 ml |

As a control, a single cell of which shape was same with that of Example was manufactured by replacing the material for intermediate layer as follows (This single cell is called "single cell of Control".). Incidentally, protective layer 7 was not provided in the single cell of control. Porous fuel electrode 2 as a base member was prepared by sintering a mixture of NiO-YSZ(Zr_{0.92}Y_{0.08}O₂) at 1400 °C- Then, onto the fuel electrode 2, a intermediate layer 6 was formed as a film by the slurry coating method with using CaTi_{0.95}Nb_{0.05}O₃ as the material for intermediate layer. Further, onto the intermediate layer 6, an interconnector film 5 was formed by the slurry coating method with using La_{0.75}Ca_{0.27}Cr_{0.9}CO_{0.1}O₃, Incidentally, in the above processes, when preparing slurry , powder of the CaTi_{0.95}Nb_{0.05}O₃ was obtained by using a planetary ball mill so that the particles having a mean particle size of 0.3 µm and the particles having a mean particle size of 2 µm were blended in the volume ratio of 4:1. Powder of the La_{0.75}Ca_{0.27}Cr_{0.9}CO_{0.1}O₃ was obtained by using a planetary ball mill so that the particles thereof had a mean particle size of 0.7 µm. The compositions of the slurries individual for the intermediate layer 6 and the interconnector film 5 were set in accordance with Table 1. The sintering conditions individual for the intermediate layer 6 and the interconnector film 5 were, in common, that the sintering temperature was 1450 °C, and the sintering time per a time was set to be 3 hours, and the temperature rising rate was set to be 200 °C/hr. Coating and sintering of the slurry for intermediate layer 6 were repeated 2 times, coating and sintering of the slurry for interconnector layer 5 were repeated 15 times.

In both the single cell of Example and the single cell of Control, as material for the air electrode, lanthanum - strontium - manganite was used. Further, SSZ(Zr_{0.89}Sc_{0.1}Ce_{0.01}O₂) was used as an electrolyte material for the single cell of Example, and YSZ(Zr_{0.92}Y_{0.08}O₂) was used as an electrolyte material for the single cell of Control. There is no significant difference in the mechanism of the electrode reaction between the YSZ and the SSZ.

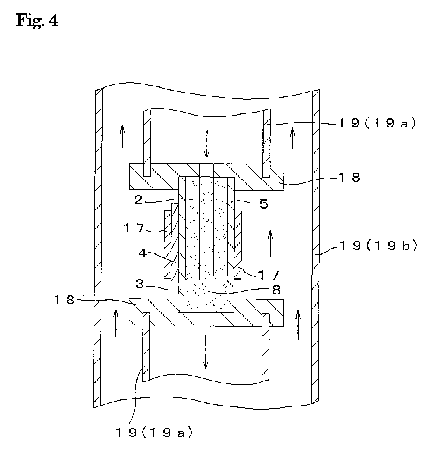

With respect to the single cells of Example and Control, power generation performance was measured by using an experimental apparatus as shown in Fig. 4. In Fig. 4, the numeral 18 denotes a sealing member which functions to support the single cell and to separate the fuel gas and air not so as to be mixed together, and the numeral 17 denotes a mesh of Pt which was used as collector. Magnetic tube 19 has a dual structure of an inner tube 19a and an outer tube 19b. The fuel gas (hydrogen) flows inside of the inner tube 19a (the arrow of one point chain line in Figure 4 shows the flow of the fuel gas.), and air flows between the inner tube 19a and the outer tube 19b (the arrow of the solid line in Figure 4 shows the flow of air). The fuel gas and the air are separated each other by the interconnector film 5, the electrolyte film 3, the sealing member 18, and the magnetic tube 19, not so as to be mixed each other. The gas sealing was performed by attaching a glass ceramics and a glass plate on the side of the single cell. The power generation performance was determined under the condition of 1000 °C, with introducing pure hydrogen humidified with 20°C into the fuel electrode 2 at 0.3L/min, and introducing air which involved water vapor of being at a level as in the atmosphere, namely, not dry air into the air electrode with IL/min.

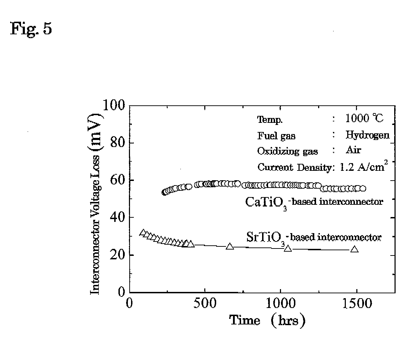

Time lapse changes of voltage loss (mV) of the interconnector in the single cells of Example and Control are shown in Fig. 5. The plot of Δ shows the result of Example, and the plot of ○ shows the result of Control. It can be confirmed that when comparing at the same current density (1.2A/cm²), the voltage loss of the interconnector in Example decreased up to 45% of that of Control. Moreover, with respect to the single cell of Control, the solid phase reaction of calcium and zirconia was observed after electricity production of 1500 hours. On the other hand, such a solid phase reaction was not observed in the single cell of Example.

The effectiveness of intermediate layer 6 and protective layer 7 used in Example was proven by the results of above experiments. Since the effectiveness of the (Sr₁₋ₓLaₓ)_{1-z}(Ti_{1-y}Nb_{y})O₃ as the material for the intermediate layer was confirmed, similar effects with this Example can be expected in the cases that a part of or all of the elements which compose the above composition are respectively substituted by one or more elements which are known as elements showing same or analogical properties with the element to be substituted. Concretely, as for the composition previously explains by using chemical formula 2, the similar effect with this Example can be expected. Further, since the effectiveness of the La_{0.6}Sr_{0.4}MnO₃ as the material for the protective layer was confirmed, similar effects with this Example can be expected in the cases that a part of or all of the elements which compose the above composition are respectively substituted by one or more elements which are known as elements showing same or analogical properties with the element to be substituted. Concretely, as for the composition previously explains by using chemical formula 3, the similar effect with this Example can be expected.

## Claims

1. A film formed article, comprising:
a lanthanum chromite-based perovskite type oxide which includes calcium in its composition and which is intended to place in an atmosphere where steam exists; and
a protective layer which is formed as film on a surface of the oxide, and which includes as a main ingredient a single phase perovskite type oxide and which possesses electronic conduction properties,
the perovskite type oxide of the protective layer is represented by a chemical formula:
(A₁₋ₓBₓ)_{1-z}(D_{1-y}E_{y})O₃
wherein A is one or more elements selected from a group of elements of scandium (Sc), yttrium (Y) and lanthanoids; B is one or more elements selected from a group of alkaline earth metal elements other than radium (Ra): and D and E are individually one or more elements selected from a group of transition metal elements belonging to the fourth, fifth and sixth periods of the periodic table except platinum (Pt) and radioelements, and typical metal elements except 1A family elements, mercury (Hg), radium (Ra) and polonium (Po); and 0≦x≦1, 0≦y≦0.5 and -0.05≦z≦ 0.1, providing that when B is calcium (Ca) D is not chromium (Gr).

2. A film formed article, comprising:
a lanthanum chromite-based perovskite type oxide which includes calcium in its composition and which is intended to place under an atmosphere where steam exists; and
a protective layer which is formed as film on a surface of the oxide, and which includes as a main ingredient a single phase perovskite type oxide and which possesses electronic conduction properties,
the perovskite type oxide of the protective layer is represented by a chemical formula:
(A₁₋ₓBₓ)_{1-z}(D_{1-y}E_{y})O₃
wherein A is one or more elements selected from a group of elements of scandium (Sc), yttrium (Y) and lanthanoids; B is one or more elements selected from a group of elements of magnesium (Mg), calcium (Ca), strontium (Sr) and barium (Ba), D is one or more elements selected from a group of transition metal elements belonging to 6A, 7A and 8 family elements in the fourth period of the periodic table; and E is one or more elements selected from a group of transition metal elements belonging to the fourth, fifth and sixth periods of the periodic table except platinum (Pt) and radioelements, and typical metal elements except 1A family elements, mercury (Hg), radium (Ra) and polonium (Po); and 0≦x≦1, 0 ≦y≦0.5 and 0.05≦z≦0.1, providing that when B is calcium (Ca) D is not chromium (Cr).

3. A film formed article, comprising:
a lanthanum chromite-based perovskite type oxide which includes calcium in its composition and which is intended to place under an atmosphere where steam exists; and
a protective layer which is formed as film on a surface of the oxide, and which includes as a main ingredient a single phase perovskite type oxide and which possesses electronic conduction properties,
the perovskite type oxide of the protective layer is represented by a chemical formula:
(A₁₋ₓBₓ)_{1-z}D_{1-y}E_{y})O₃
wherein A is one or more elements selected from a group of elements of scandium (Sc), yttrium (Y) and lanthanoids; B is one or two elements selected from a group of elements of strontium (Sr) and calcium (Ca), D is one or more elements selected from a group of transition metal elements belonging to 6A, 7A and 8 family elements in the fourth period of the periodic table; and E is one or more elements selected from a group of transition metal elements belonging to the fourth period of the periodic table; and 0≦x≦1,0≦y≦0,5 and -0.05≦z≦0,1 providing that when B is calcium (Ca) D is not chromium (Cr).

4. A film formed article, comprising:
a lanthanum chxozuite-based perovskite type oxide which includes calcium in its composition and which is intended to place under an atmosphere where steam exists; and
a protective layer which is formed as film on a surface of the oxide, and which includes as a main ingredient a single phase perovskite type oxide and which possesses electronic conduction properties,
the perovskite type oxide of the protective layer is represented by a chemical formula:
(La₁₋ₓSrₓ)_{1-z}(D_{1-y}E_{y})O₃
wherein D is one or more elements selected from a group of transition metal elements belonging to 6A, 7A and 8 family elements in the fourth period of the periodic table and E is one or more elements selected from a group of transition metal elements belonging to the fourth period of the periodic table; and 0≦x≦1, 0≦y≦0.5 and -0.05≦z≦0.1.

5. A film formed article , comprising:
a protective layer which is formed as film on a surface of an interconnector of a fuel cell, the interconnector is made of a lanthanum chromite-based perovskite type oxide including calcium in its composition,
the protective layer includes as a main ingredient a single phase perovskite type oxide and which possesses electronic conduction properties, and
the perovskite type oxide of the protective layer is represented by the chemical formula:
(A₁₋ₓBₓ)_{1-z}(D_{1-y}E_{y})O₃
wherein A is one or more elements selected from a group of elements of scandium (Sc), yttrium (Y) and lanthanoids; B is one or more elements selected from a group of alkaline earth metal elements other than radium (Ra); and D and E are individually one or more elements selected from a group of transition metal elements belonging to the fourth, fifth and sixth periods of the periodic table except platinum (Pt) and radioelements, and typical metal elements except 1A family elements, mercury (Hg), radium (Ra) and polonium (Po); and 0≦x≦1, 0≦y≦0.5 and -0.05≦z≦0.1, providing that when B is calcium (Ca) D is not chromium (Cr).

6. The film formed article according to Claim 5, wherein an intermediate layer, which sustains electrical conductivity and water vapor resistance in a reducing atmosphere, is provided between the interconnector and a fuel electrode.
